(19) Europäisches Patentamt
European Patent Office
Office européen des brevets

(11) **EP 2 467 291 B1**

(12) **EUROPÄISCHE PATENTSCHRIFT**

(45) Veröffentlichungstag und Bekanntmachung des Hinweises auf die Patenterteilung:
**16.12.2015 Patentblatt 2015/51**

(21) Anmeldenummer: **10742475.6**

(22) Anmeldetag: **06.08.2010**

(51) Int Cl.:
*B62D 15/02* *(2006.01)*      *B60W 30/12* *(2006.01)*
*B60K 31/00* *(2006.01)*

(86) Internationale Anmeldenummer:
**PCT/EP2010/061490**

(87) Internationale Veröffentlichungsnummer:
**WO 2011/020715 (24.02.2011 Gazette 2011/08)**

(54) **VERFAHREN UND STEUERGERÄT ZUM ROBUSTEN ERKENNEN EINES FAHRSPURWECHSELS EINES FAHRZEUGS**

METHOD AND CONTROLLER FOR A ROBUST DETECTION OF A VEHICLE LANE CHANGE

PROCÉDÉ ET CONTRÔLEUR POUR UNE DETECTION ROBUSTE DU CHANGEMENT DE VOIE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **21.08.2009 DE 102009028774**

(43) Veröffentlichungstag der Anmeldung:
**27.06.2012 Patentblatt 2012/26**

(73) Patentinhaber: **Robert Bosch GmbH 70442 Stuttgart (DE)**

(72) Erfinder:
• **ROELKE, Volker 71229 Leonberg (DE)**
• **RENTSCHLER, Tobias 75180 Pforzheim (DE)**

(56) Entgegenhaltungen:
**EP-A1- 2 012 211      WO-A1-2006/037445
DE-A1- 19 906 614      US-A- 5 892 855
US-A1- 2004 016 870**

EP 2 467 291 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die vorliegende Erfindung bezieht sich auf ein Verfahren gemäß Anspruch 1, ein Steuergerät gemäß Anspruch 12, sowie ein Computerprogrammprodukt gemäß Anspruch 13.

Systeme zur Spurverlassenswarnung (LDW = Lane Departure Warning), bei denen der Fahrer eines Kraftfahrzeugs akustisch oder haptisch vor dem Verlassen der Fahrspur gewarnt wird, sind inzwischen kommerziell verfügbar. Neben diesen LDW-Systemen sind neuerdings aber auch Lenkassistenzsysteme (LKS-System = Lane Keeping Support System = Fahrspurhalteunterstützungssystem) in Serie, die den Fahrer durch gerichtete Führungsmomente beim Halten des Fahrzeugs in der Fahrspur aktiv unterstützen (siehe beispielsweise die Druckschrift DE 101 37 292). Diese Systeme erlauben dem Fahrer durch diverse ausgeprägte Spurwechselfunktionalitäten einen komfortablen Spurwechsel durchzuführen. Ebenso sind Systeme im wissenschaftlichen Umfeld bekannt die dem Fahrer einen geführten Spurwechsel bieten. Herbei sind jedoch meist zwei Fahrspurbegrenzungslinien zur Auswertung des Überfahrens oder Verlassens einer Fahrspur notwendig, was die Auswertung aufwändig und zeitintensiv werden lässt.

Diese LKS-Systeme benötigen weiterhin für eine Spurführung eine Solllinie auf der sie die Fahrzeugführung durchführen können. Zur Generierung dieser Solllinie kommen bisher einfache Verfahren, die parallele Einzellinien verarbeiten, zum Einsatz. Aber auch Verfahren die direkt auf Messpunkten basieren und Zusatzsensoren (z.B. digitale Karte, Radar) nutzen, können eine Solllinie erzeugen. Diese Solllinie wird im Stand der Technik mit Standard Filtern (Tiefpassfilter, Kalmanfilter, ..) gefiltert, um Ihrer Dynamik zu beruhigen. Eine solche Filterung ist jedoch zeitaufwändig und deshalb in Echtzeitsystemen nachteilhaft.

Die WO 2006/037445 A1 offenbart ein Verfahren und eine Vorrichtung zur Fahrerwarnung oder zum aktiven Eingreifen in die Fahrdynamik, falls ein Verlassen einer Fahrspur droht.

Die US 2004/016870 A1 offenbart ein Objektdetektionssystem für ein Fahrzeug.

Die US 5,892,855 A offenbart eine Vorrichtung zum Detektieren eines Objekts, das sich vor einem Fahrzeug, wobei eine Mehrzahl von Kameras mit unterschiedlichem Blickwinkel verwendet wird.

Offenbarung der Erfindung

Vor diesem Hintergrund wird mit der vorliegenden Erfindung ein Verfahren, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Erkennen eines Fahrspurwechsels eines Fahrzeugs oder zum Bereitstellen einer Krümmung einer Solllinie für eine Spurführung eines Fahrzeugs, wobei das Verfahren die folgenden Schritte aufweist:

- Empfangen einer ersten Fahrspurinformation, die eine optisch erfasste erste Fahrspurbegrenzung, insbesondere einer Einzellinie, neben oder vor einer linken Fahrzeugseite repräsentiert und/oder Empfangen einer zweiten Fahrspurinformation, die eine optisch erfasste zweite Fahrspurbegrenzung, insbesondere einer Einzellinie, neben oder vor einer rechten Fahrzeugseite repräsentiert; und
- Ermitteln einer Krümmung einer gewünschten Solllinie für eine Spurführung eines Fahrzeugs aus der mit einem ersten Gewichtsfaktor gewichteten ersten Fahrspurinformation und der mit einem zweiten Gewichtsfaktor einer gewichteten zweiten Fahrspurinformation, wobei derjenige des ersten (a) oder zweiten (b) Gewichtsfaktors einen größeren Wert erhält, der der ersten oder zweiten Fahrspurinformation zugeordnet ist, die ein geringeres Krümmungsverhalten als die andere Fahrspurinformation aufweist.

In einer vorteilhaften Ausführung der Erfindung wird ein Fahrspurwechsel detektiert, wenn die erste und/oder zweite Fahrspurinformation eine Fahrspurbegrenzung repräsentiert, die einen vorbestimmten lateralen Abstand zu einer Fahrzeugseite unterschreitet.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches oder elektronisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die vorliegende Erfindung basiert auf der Erkenntnis, dass nun ein Fahrspurwechsel des Fahrzeugs erkannt werden kann, wobei nur eine Linie in Form einer Fahrspurbegrenzung verwendet werden braucht. Unter einem Fahrspurwechsel kann dabei bereits das Überfahren einer Fahrspurbegrenzung verstanden werden. Hierbei wird ein lateraler Abstand der Fahrspurbegrenzung zu einer der beiden Fahrzeugseiten ausgewertet und geprüft, ob dieser laterale Abstand ein vorbestimmtes Mindestmaß unterschreitet. Der laterale Abstand zwischen der Fahrspurbegrenzung und der Fahrzeugseite wird dabei in einem Steuergerät aus der empfangenen ersten und/oder zweiten Fahrspurinformation generiert. Hierbei kann eine Information über einen Einbau oder den Blickwinkel eines optischen Sensors (wie beispielsweise einer Videokamera) in dem Fahrzeug bei der Bereitstellung der Fahrspurinformation berücksichtigt werden. Weiterhin basiert ein anderer Aspekt der vorliegenden Erfindung auf der Erkenntnis, dass eine deutliche Beruhigung einer Solllinie für eine Spurführung des Fahrzeugs erreicht werden kann, wenn die Krümmung der gewünschten Solllinie aus der mit einem ersten Gewichtsfaktor gewichteten ersten Fahrspurinformation unter der mit einem zweiten Gewichtsfaktor und gewichteten zweiten Fahrspurinformation ermittelt wird. Durch die Gewichtung mit dem ersten und zweiten Gewichtsfaktor der jeweiligen Fahrspurinformationen, die beispielsweise eine Krümmung der entsprechenden Fahrspurbegrenzung darstellen, kann eine nachträgliche Filterung der Solllinie vermieden werden. Zugleich werden wiederum nur optische erfasste Informationen über eine Fahrspurbegrenzung wie beispielsweise eine Fahrbahnmarkierung, ein Übergang zwischen einer Fahrbahn und einem Grünstreifen oder Ähnliches verwendet. Durch das Vermeiden einer nachträglichen Filterung der ermittelten Solllinie die gewünschte Solllinie deutlich schneller und technisch einfacher bereitgestellt werden. Der zweite Schritt kann dabei als zweigeteilt angesehen werden, so dass gemäß einer ersten Ausführungsform der Erfindung der erste Schritt und der erste Teil des zweiten Schrittes und als zweite Ausführungsform der Erfindung der erste Schritt und der zweite Teil des zweiten Schrittes zu betrachten sind. Es können auch in einer Ausführungsform beide Varianten des zweiten Schrittes enthalten sein, was einen zusätzlichen Vorteil bei der Unterstützung des Fahrers ermöglicht.

Die vorliegende Erfindung bietet den Vorteil, dass nunmehr ein Fahrspurwechsel lediglich auf der Basis von (einer) optischen erfassten Fahrspurbegrenzung(en) erkannt werden kann, so dass für diese Erkennung einer geringer numerischer oder schaltungstechnischer Aufwand erforderlich ist. Zugleich kann die Information über die optische erfasste Fahrspurbegrenzung (die bereits meist für andere Fahrerassistenzsysteme zur Verfügung steht) ausgenutzt werden, um eine ruhige Solllinie für eine Spurführung des Fahrzeugs bereitzustellen. Für diese Bereitstellung der ruhigen Solllinie werden dann keine weiteren Informationen, beispielsweise aus einer digitalen Karte oder über andere Umfeldobjekte benötigt. Der hier vorgestellte Ansatz ermöglicht somit eine effiziente Ausnutzung von einer geringen Anzahl von einfach erfassten Informationen und ist somit gegenüber den bekannten Ansätzen im Stand der Technik überlegen.

Gemäß einer besonderen Ausführungsform der Erfindung kann im Schritt des Detektierens ein Fahrspurwechsel dann erkannt werden, wenn sich eine Fahrzeugseite nicht mehr in einem lateralen Korridor zu einer Fahrspurbegrenzung befindet, die durch die erste und/oder zweite Fahrspurinformation repräsentiert ist. Eine derartige Ausführungsform der vorliegenden Erfindung bietet den Vorteil, dass auch bei einer unstetigen Fahrweise (beispielsweise einem Hin- und Herpendelndes Fahrzeugs auf einer Fahrspur) zweifelsfrei ein Fahrspurwechsel erkannt werden kann. Kommt beispielsweise der Fahrer einer linken Fahrspurmarkierung sehr nahe und überfährt diese kurzzeitig, wird er mit seinem Fahrzeug den lateralen Korridor nicht sofort verlassen. Bemerkt der Fahrer seine Unachtsamkeit und steuert wieder auf seine ursprüngliche Fahrspur zurück, kann dies trotz dem kurzzeitigen Überfahren der Fahrspurmarkierung als "kein Fahrspurwechsel" erkannt werden, so dass eine automatische Fahrspurwechselunterstützungsfunktion nicht aktiviert werden braucht.

Auch kann im Schritt des Detektierens ein Fahrspurwechsel dann erkannt werden, wenn beim kontinuierlichen Auswerten eines lateralen Abstandes zwischen der durch die erste und/oder zweite Fahrspurinformation repräsentierten Fahrspurbegrenzung und einer Fahrzeugseite ein Sprung in dem lateralen Abstand der Fahrspurbegrenzung zur Fahrzeugseite erkannt wird. Eine derartige Ausführungsform der vorliegenden Erfindung bietet den Vorteil, dass weitere ins Blickfeld des Sensors in gelangende Linieninformationen ausgewertet werden können. Überfährt beispielsweise der Fahrer mit seinem Fahrzeug eine Fahrspurbegrenzung auf einer Autobahn zwischen der linken und der mittleren Fahrspur, so wird der Sensor nach dem Überfahren dieser Fahrspurbegrenzung die Fahrbahnrandmarkierung auf der nun ganz linken Fahrbahnseite erkennen. Dies führt dazu, dass nun der Abstand zwischen der ganz linken Fahrbahnrandmarkierung und der Fahrzeugseite als lateraler Abstand gewertet. Durch diesen Sprung des lateralen Abstandes in den auszuwertenden Fahrbahnmarkierungen kann somit auch ein Fahrspurwechsel erkannt werden.

Ferner ist es auch günstig, wenn im Schritt des Detektierens der Fahrspurwechsel dann erkannt wird, wenn der erkannte Sprung in dem lateralen Abstand der Fahrspurmarkierung zur Fahrzeugseite innerhalb einer vorbestimmten Zeitspanne oder einer zurückgelegten Strecke erfolgt, nachdem die durch die erste und/oder zweite Fahrspurinformation repräsentierte Fahrspurbegrenzung den vorbestimmten Abstand unterschritten hat oder nachdem sich eine Fahrzeugseite nicht mehr in dem lateralen Korridor zu der Fahrspurbegrenzung befindet. Eine derartige Ausführungsform der vorliegenden Erfindung bietet den Vorteil einer sehr zuverlässigen Erkennung eines Fahrspurwechsels durch die genannte zeitliche Abfolge zwischen dem erkannten Sprung und dem Unterschreiten des vorbestimmten Abstandes oder des Verlassens des lateralen Korridors zu der. Fahrspurbegrenzung.

In einer anderen Ausführungsform der vorliegenden Erfindung kann im Schritt des Detektierens der Fahrspurwechsel dann erkannt werden, wenn ein absoluter Wert eines lateralen Abstandes zwischen der Fahrzeugseite und der durch die erste und/oder zweite Fahrspurinformation repräsentierten Fahrspurbegrenzung einen vorbestimmten Abstandsschwellenwert überschreitet. Eine derartige Ausführungsform der vorliegenden Erfindung bietet den Vorteil, dass eine sehr robuste Erkennung eines Fahrspurwechsels erreicht werden kann. Insbesondere dann, wenn ein absoluter Wert des lateralen Abstandes zwischen der Fahrzeugseite und einer Fahrspurbegrenzung größer als ein vorbestimmter Abstandsschwellenwert ist, kann auf einen Sprung von betrachteten Fahrspurmarkierungen und somit einen Fahrspurwechsel geschlossen werden.

Auch kann in einer weiteren Ausführungsform der Erfindung im Schritt des Detektierens der Fahrspurwechsel nach einem Überschreiten des vorbestimmten Abstandsschwellwertes erkannt werden, wenn ein absoluter Wert des lateralen Abstandes zwischen der Fahrzeugseite und der durch die erste und/oder zweite Fahrspurinformation repräsentierte Fahrspurbegrenzung in einem Korridorbereich liegt, der Abstandswerte umfasst, die kleiner als der vorbestimmte Abstandsschwellenwert sind. Eine derartige Ausführungsform der vorliegenden Erfindung bietet den Vorteil, die Erkennung eines tatsächlich stattgefundenen Fahrspurwechsels des Fahrzeugs abzusichern und somit einen abrupten Abbruch der Unterstützung des Fahrspurwechsels zu vermeiden. Insbesondere dann, wenn sich das Fahrzeug auf der neuen Fahrspur befindet, sollte ein absoluter Wert des lateralen Abstandes zwischen der Fahrzeugseite und der (neuen) Fahrspurbegrenzung in dem Korridorbereich liegen.

Auch kann im Schritt des Empfangens ferner eine dritte Fahrspurinformation, die eine optisch erfasste dritte Fahrspurbegrenzung links von der ersten Fahrspurbegrenzung repräsentiert und/oder eine vierte Fahrspurinformation empfangen werden, die eine optisch erfasste vierte Fahrspurbegrenzung rechts von der zweiten Fahrspurbegrenzung repräsentiert. Im Schritt des Detektierens kann dann der ersten und/oder zweiten Fahrspurinformation ein höherer Zuverlässigkeitswert als der dritten und/oder vierten Fahrspurinformation zugeordnet werden. Das Detektieren des Fahrspurwechsels kann dann erfolgen, wenn eine Summe der Zuverlässigkeitswerte der beim Detektieren berücksichtigten Fahrspurinformationen größer als ein vordefinierter Zuverlässigkeitsschwellwert ist. Eine derartige Ausführungsform der vorliegenden Erfindung bietet den Vorteil, dass eine robuste Erkennung eines Spurwechsels durch die Auswertung von mehreren Fahrspurbegrenzungslinien erfolgen kann. Insbesondere können auch Fahrspurbegrenzungsmarkierungen mit berücksichtigt werden, die einen größeren Abstand zum Fahrzeug als sie unmittelbar zum Fahrzeug benachbarten Fahrspurbegrenzungsmarkierung aufweisen. Erst wenn somit eine gewisse Anzahl von mit Zuverlässigkeitswerten gewichtet Fahrspurbegrenzungen erfasst sind, kann der Fahrspurwechsel tatsächlich als solcher erkannt werden.

In einer anderen Ausführungsform der vorliegenden Erfindung kann im Schritt des Detektierens oder Ermittelns die Krümmung der Solllinie auf der Basis einer Addition einer mit dem ersten Gewichtsfaktor gewichteten ersten Krümmung und einer mit dem zweiten Gewichtsfaktor gewichteten zweiten Krümmung erfolgen, wobei die erste Krümmung aus der ersten Fahrspurinformation ableitbar ist und die zweite Krümmung aus der zweiten Fahrspurinformation ableitbar ist. Eine derartige Ausführungsform der vorliegenden Erfindung bietet den Vorteil, dass eine numerisch oder schaltungstechnisch einfach auszuführende Verknüpfung zwischen der Krümmung der ersten Fahrspurbegrenzung und der Krümmung der zweiten Fahrspurbegrenzung ermöglicht wird. Hierdurch kann sehr schnell und effizient eine ruhige Solllinie für die Fahrspurführung des Fahrzeugs bereitgestellt werden.

Günstig ist es auch, wenn im Schritt des Detektierens oder Ermittelns für den ersten und den zweiten Gewichtsfaktor ein gleicher Wert verwendet wird, falls ein Korrelationswert zwischen der Krümmung aus der ersten Fahrspurinformation und der Krümmung aus der zweiten Fahrspurinformation einen vordefinierten Korrelationsschwellwert überschreitet. Insbesondere dann, wenn man die beiden betrachteten Fahrspurbegrenzungen ein hohen Korrelationswert in Bezug auf deren Krümmung aufweisen (das heißt ein näherungsweise gleiches oder ähnliches Krümmungsverhalten aufweisen) kann bereits eine sehr ruhige Solllinie aus den Krümmungen der beiden betrachteten Fahrspurbegrenzungen generiert werden. Aus diesem Grund kann eine gleiche Gewichtung, beispielsweise mit einem Gewichtungsfaktor von 0,5 dieser beiden betrachteten Fahrspurbegrenzungen, insbesondere deren Krümmungsverhalten erfolgen.

Auch kann gemäß einer anderen Ausführungsform der Erfindung, wenn ein Korrelationswert zwischen der Krümmung aus der ersten Fahrspurinformation und der Krümmung aus der zweiten Fahrspurinformation einen vordefinierten Korrelationsschwellwert unterschreitet, im Schritt des Detektierens oder Ermittelns für jede der beiden Fahrspurinformationen ein gemittelter Krümmungsableitungswert aus Krümmungsableitungswerten über mehrere zum Ermittlungszeitpunkt vorausgegangene Zeitintervalle gebildet werden. Beim Ermitteln der Krümmung einer gewünschten Solllinie können dann für den ersten und den zweiten Gewichtsfaktor unterschiedliche Werte verwendet werden, wobei derjenige des ersten und zweiten Gewichtsfaktors den größeren Wert erhält, bei dem die zugeordnete Fahrspurinformation den kleineren gemittelten Krümmungsableitungswert aufweist. Eine derartige Ausführungsform der vorliegenden Erfindung bietet den Vorteil, dass eine unterschiedliche Gewichtung der Krümmungen der ersten und zweiten Fahrspurbegrenzung lediglich dann erfolgt, wenn der Korrelationswert zwischen den Krümmungen der ersten und zweiten Fahrspurbegrenzungen unter einer vordefinierten Schranke bleibt. In diesem Fall geht diejenige Fahrspurbegrenzung mit den gemittelten geringeren Krümmungsableitungswerten in vergangenen Beobachtungszeitpunkten mit einem deutlich höheren Gewicht in die Ermittlung der Krümmung der gewünschten Solllinie ein.

In einer anderen Ausführungsform der Erfindung können, wenn ein Korrelationswert zwischen der Krümmung aus der ersten Fahrspurinformation und der Krümmung aus der zweiten Fahrspurinformation in einem vordefinierten Korrelationsschwellwertbereich liegt, im Schritt des Detektierens oder Ermittelns für den ersten und den zweiten Gewichtsfaktor unterschiedliche Werte verwendet werden, wobei für jede der beiden Fahrspurinformationen ein gemittelter Krümmungsableitungswert aus Krümmungsableitungswerten über mehrere zum Ermittlungszeitpunkt vorausgegangene Zeitintervalle gebildet wird und derjenige des ersten und zweiten Gewichtsfaktors den Wert

$$W_I = W_0 + |R| \cdot \frac{(0.5 - W_0)}{R_{max}}$$

erhält, bei dem die zugeordnete Fahrspurinformation den kleineren gemittelten Krümmungsableitungswert aufweist und der andere des ersten und zweiten Gewichtsfaktors den Wert

$$W_{NI} = 1 - W_I$$

erhält, wobei

R den Korrelationskoeffizient, $W_0$ einen Gewichtswert bei einem Korrelationskoeffizienten von Null und $R_{max}$ eine obere Schranke des Korrelationskoeffizienten repräsentiert. Eine derartige Ausführungsform der vorliegenden Erfindung bietet den Vorteil, dass in einem bestimmten Wertebereich des Korrelationswerts der erste und zweite Gewichtsfaktor sehr einfach durch eine lineare Vorschrift bestimmt werden kann. Dies ermögliche eine schnelle und effiziente Berechnung, zur Bereitstellung der ruhigen Solllinie zur Spurführung des Fahrzeugs.

Um größere Sprünge in der Solllinie für die Spurführung zu vermeiden, kann ferner im Schritt des Detektierens oder Ermittelns in unterschiedlichen Zeitintervallen eine Änderung des ersten und/oder zweiten Gewichtsfaktors gegenüber vorangehenden Zeitintervallen bestimmt werden, wobei der erste und/oder zweite Gewichtsfaktors um höchstens einen vorbestimmten Prozentsatz oder um höchstens einen vorbestimmten absoluten Wert geändert wird.

Auch kann in einer weiteren Ausführungsform der Erfindung im Schritt des Empfangens ferner eine dritte Fahrspurinformation, die eine optisch erfasste dritte Fahrspurbegrenzung links von der ersten Fahrspurbegrenzung repräsentiert und/oder eine vierte Fahrspurinformation empfangen werden, die eine optisch erfasste vierte Fahrspurbegrenzung rechts von der zweiten Fahrspurbegrenzung repräsentiert. Im Schritt des Detektierens oder Ermittelns kann ferner die Krümmung der gewünschten Solllinie für eine Spurführung des Fahrzeugs aus der mit einem dritten Gewichtsfaktor gewichteten dritten Fahrspurinformation und/oder der mit einem vierten Gewichtsfaktor gewichteten vierten Fahrspurinformation ermittelt werden. Eine derartige Ausführungsform der vorliegenden Erfindung bietet den Vorteil, dass durch die Einbeziehung von Nachbarlinien links von der ersten Fahrspurbegrenzung und/oder rechts von der zweiten Fahrspurbegrenzung eine zuverlässigere und damit ruhigere Solllinie zur Spurführung des Fahrzeugs bestimmt werden kann.

Die Erfindung wird anhand der beigefügten Zeichnungen beispielhaft näher erläutert. Es zeigen:

Fig. 1      ein Blockschaltbild einer Anordnung von Elementen zur Erfassung von Fahrspurbegrenzungen, um die vorliegende Erfindung gemäß einem ersten Ausführungsbeispiel auszuführen;

Fig. 2      ein Ablaufdiagramm eines Ausführungsbeispiels der vorliegenden Erfindung als Verfahren;

Fig. 3      ein Ablaufdiagramm eines weiteren Ausführungsbeispiels der vorliegenden Erfindung als Verfahren;

Fig. 4      ein Ablaufdiagramm eines weiteren Ausführungsbeispiels der vorliegenden Erfindung als Verfahren;

Fig. 5      ein Ablaufdiagramm eines anderen Ausführungsbeispiels der vorliegenden Erfindung als Verfahren; und

Fig. 6a-b  Darstellungen zur Veranschaulichung der Bildung von Korrelationswerten aus unterschiedlichen Linien.

Gleiche oder ähnliche Elemente können in den Figuren durch gleiche oder ähnliche Bezugzeichen verstehen sein, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

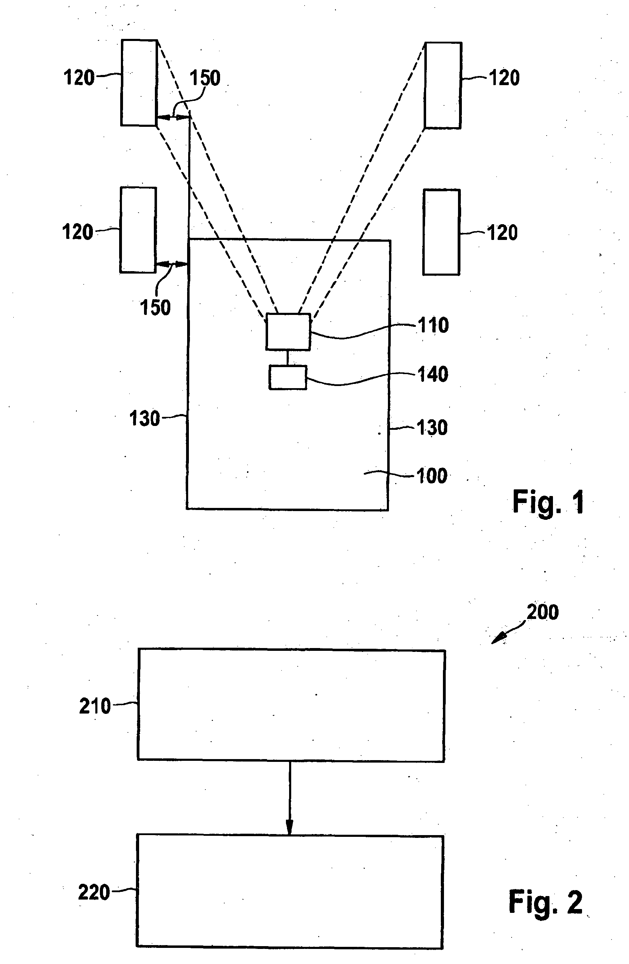

Fig. 1 zeigt ein Blockschaltbild einer Anordnung von Elementen zur Erfassung vor Fahrspurbegrenzungen, um die vorliegende Efindung gemäß einem ersten Ausführungsbeispiel auszuführen. Gemäß dem in Figur 1 dargestellten Ausführungsbeispiel umfasst ein Fahrzeug 100 eine optische Sensoreinheit 110 (wie beispielsweise eine Videokamera) die Fahrspurinformationen über Fahrspurbegrenzungen, beispielsweise die Fahrbahnmarkierungen 120, aufzeichnet. Diese Fahrbahnmarkierungen 120 befinden sich rechts bzw. links vor oder neben einer Fahrzeugseite 130 des Fahrzeugs 100. Die Fahrspurbegrenzungen 120 können Fahrbahnrandmarkierungen sein oder durch einen Übergang zwischen einem Fahrbahnbelag und einem seitenstreifen aus Sand oder Gras gebildet sein. Wichtig ist lediglich, dass ein linienförmiger Übergang (Kante) als Fahrspurbegrenzung 120 erkannt wird, der beispielsweise in einer digitalen Bildverarbeitung unter Verwendung einer Kantenerkennung ausgewertet werden kann. Aus der erkannten Fahrspurbegrenzung 120 wird dann die entsprechende Fahrspurinformation generiert, wobei beispielsweise eine Berücksichtigung eines Winkels erfolgt, aus dem die entsprechende Fahrspurbegrenzung 120 in dem optischen Sensor 110 erfasst wird. Die Fahrspurinformation, die von den entsprechend erfassten Fahrspurmarkierung gebildet werden, können dann an eine Auswerteeinheit 140 übertragen werden, in der aus empfangenen Fahrspurinformationen beispielsweise eine Krümmung der entsprechenden Fahrspurmarkierung 120 oder ein lateraler Abstand 150 zwischen einer Fahrzeugseite 130 und der Fahrspurmarkierung 120 ermittelt wird. Ein lateraler Abstand 150 kann dabei nicht nur für eine direkt neben dem Fahrzeug 100 befindliche Fahrspurmarkierung 120 bestimmt werden; vielmehr kann auch ein voraussichtlicher lateraler Abstand 150 zu einer Fahrspurmarkierung 120 (beispielsweise durch Inter- oder Extrapolation) bestimmt werden, der bei einer Weiterfahrt des Fahrzeugs 100 zu einer in Fahrtrichtung vorausliegenden Fahrspurbegrenzung 120 eintreten wird. In der Auswerteeinheit 140 kann dann die Fahrspurinformation von einer oder mehreren Fahrspurbegrenzungen 120 gemäß dem nachstehend detaillierter beschriebenen Ansatz zur Detektion eines Fahrspurwechsels verwendet werden. Ein detektierter "Fahrspurwechsel" kann dann beispielsweise in einem Fahrerassistenzsystem zur Unterstützung des Fahrers bei der Ausführung des Fahrspurwechsels weiterverwendet werden.

In einem anderen Ausführungsbeispiel der vorliegenden Erfindung kann auch in der Auswerteeinheit 140 aus den von der optischen Erfassungseinheit 110 erkannten ersten und zweiten Fahrspurinformationen eine Krümmungsverhalten von zwei getrennten Fahrspurbegrenzungen 120 gemäß dem nachfolgend ebenfalls detaillierter beschriebenen Ansatz bestimmt werden. Unter Verwendung des Krümmungsverhaltenes dieser beiden Fahrspurbegrenzungen 120 kann dann eine sehr ruhige Solllinie für eine Spurführung des Fahrzeugs 100 bestimmt werden. Unter einer ruhigen Solllinie wird dabei eine (virtuelle) Linie verstanden, auf der das Fahrzeug durch einen technischen Spurführungsassistenten gehalten werden soll. Um einen möglichst großen Komfort für die Fahrzeuginsassen zu bieten, sollte diese Linie möglichst keine oder nur geringe Schwankungen oder Sprünge aufweisen. Der nachfolgend detaillierter beschriebene Ansatz bietet dabei die Möglichkeit, eine nachträgliche Filterung einer bestimmten Solllinie zur Beruhigung dieser Solllinie zu vermeiden, so dass eine schnelle und effektive Berechnung dieser ruhigen Solllinie möglich wird.

Fig. 2 zeigt ein Ablaufdiagramm eines Ausführungsbeispiels der vorliegenden Erfindung als Verfahren 200 zum Erkennen eines Fahrspurwechsels eines Fahrzeugs oder zum Bereitstellen einer Solllinie für eine Spurführung eines Fahrzeugs bei der Fahrt des Fahrzeugs. Das Verfahren umfasst einen Schritt des Empfangens 210 einer ersten Fahrspurinformation, die eine optisch erfasste erste Fahrspurbegrenzung neben oder vor einer linken Fahrzeugseite repräsentiert und/oder Empfangen einer zweiten Fahrspurinformation, die eine optisch erfasste zweite Fahrspurbegrenzung neben oder vor einer rechten Fahrzeugseite repräsentiert. Weiterhin umfasst das Verfahren 200 einen weiteren Schritt des Detektierens 220 eines Fahrspurwechsels, wenn die erste und/oder zweite Fahrspurinformation eine Fahrspurbegrenzung repräsentiert, die einen vorbestimmten lateralen Abstand zu einer Fahrzeugseite unterschreitet oder Ermitteln einer Krümmung einer gewünschten Solllinie für eine Spurführung eines Fahrzeugs aus der mit einem ersten Gewichtsfaktor gewichteten ersten Fahrspurinformation und der mit einem zweiten Gewichtsfaktor einer gewichteten zweiten Fahrspurinformation.

Ein erster Aspekt des nachstehend näher vorgestellten Ansatzes kann für eine verbesserte Spurwechselunterstützungsfunktionalität eines Lane Keeping Support (LKS-) Systems eingesetzt werden. Gemäß diesem Aspekt der Erfindung wird ein neues Verfahren zur Erkennung vorgeschlagen, ob das Fahrzeug eine Fahrspurbegrenzung der derzeit verwendeten Fahrspur überfahren hat. Das Verfahren basiert gegenüber den bekannten Ansätzen nicht mehr auf der Notwendigkeit der Existenz oder der Auswertung von zwei Linien, die eine Fahrspur des betrachteten Fahrzeugs beschreiben. Die Fahrspur des betrachteten Fahrzeugs wird in der nachfolgenden Beschreibung teilweise auch als EGO-Fahrspur bezeichnet. Zur Umsetzung des hier vorgeschlagenen Ansatzes werden insbesondere keine Informationen über ein weiteres Umfeldobjekt (das z.B. durch Video/ Radar/Lidarsensoren aufgenommen wurde) und auch keine Navigationsdaten (z.B. aus einer spurgenauen digitaler Karte) benötigt. Der hier vorgeschlagene Ansatz nutzt daher ausschließlich die durch einen optischen Sensor (z.B. einen Videosensor) detektierten Linieninformationen.

Ein wichtiger Aspekt des hier vorgestellten Ansatzes kann darin gesehen werden, dass eine Berücksichtigung und eine verfahrensgemäßen Kombination der Einzellinieninformation zu einer robusten Erkennung des Überfahrens der eigenen Fahrspurbegrenzung erfolgt. Das nachstehend vorgeschlagene Verfahren kann in LKS-Systemen mit fast allen Automatisierungsgraden genutzt werden. Die Vorteile des detailliert vorgestellten Ansatzes können drin gesehen werden, dass eine Reduktion der LKS-Deaktivierungsrate im Spurwechselfall möglich wird, das LKS-System damit robuster wird (was eine Akzeptanzerhöhung beim Systemnutzer bewirkt) und sich für den Fahrer eine höhere Systemverfügbarkeit ergibt. Außerdem ist das Verfahren bei Automatisierung des Spurwechsels (z.B. wenn das LKS-System einen selbstständigen Spurwechsel durchführt) unverzichtbar. Hier erzeugt das beschriebene Verfahren in zumindest einer Ausführungsvariante die Voraussetzung für eine robuste Durchführbarkeit dieses automatisierten Fahrmanövers.

Eingebettet ist sind Verfahren zur Fahrspurführung in ein LKS-System, das diverse Automatisierungsgrade besitzen kann. Bei in LKS-Systemen angewandten Verfahren wird meist, basierend auf der linken und rechten Fahrspurbegrenzung, eine Solllinie für die Fahrbahn berechnet (teils auch mit Karten und Objektinformationen in einer Daten-Fusion. Beim Überfahren einer Fahrspurbegrenzung ergeben sich ein Vorzeichenwechsel und eine große Änderung des absoluten Wertes in der Querablage bezogen auf die Mittellinie. Wird nun die linke oder rechte Linie "verloren" (z.B. ist sie für den optischen Sensor nicht mehr sichtbar), so kann keine Mittellinie gebildet werden. Das Überfahren der Fahrspurbegrenzung kann dann nicht erkannt werden und das LKS-System deaktiviert sich. Liegt eine geführte Spurwechselfunktion vor, so wird das Manöver abgebrochen was zu gefährlichen Situationen z.B. bei schon halb durchgeführten Manövern führen kann.

Die nachfolgende Beschreibung bezieht sich auf ein detailliertes Ausführungsbeispiel der vorliegenden Erfindung als Verfahren. Dieses Verfahren basiert nicht mehr auf der Bestimmung einer solchen Mittellinie, sondern nutzt die Existenz und Auswertung von einzelnen Linien. Daraus leitet das Verfahren gemäß dem hier vorgestellten Ausführungsbeispiel die Information des "Überfahrens der Fahrspurbegrenzung" ab. Das Vorgehen für diesen Ansatz besteht nun darin, die Information ausgehend auf sicheren oder zumindest sicher erkannten, dem Fahrzeug lateral nahen Linien abzuleiten. Ist dies nicht möglich können weitere gefundene Linien z.B. der Nachbarspuren berücksichtigt werden.

Es werden die Situationen "Überfahren linke Fahrspurbegrenzung" und "Überfahren rechte Fahrspurbegrenzung" unterschieden. Das Verfahren besitzt ferner eine sehr große Robustheit durch die Verwendung von lateralen Korridoren um die erkannten Linien, die in einer Auswertungseinheit virtuell um diese erkannten Linien gelegt werden können.

In der Ausführung des Verfahrens kann jede vorhandene Linie (dies können die Linien der eigenen Fahrspur, ebenso die Linien der Nachbarspuren, Teer-Grasübergänge oder Bordsteine sein) beispielsweise auf ein "Überfahren" und/oder "Springen" hin geprüft werden.

Die Prüfung des Überfahrens der Linien wird beispielsweise anhand der lateralen Fahrzeugablage zu der Linie (d.h. einem erkannten lateralen Abstand $Y_{lat}$ zwischen der Linie und der Fahrzeugseite) durchgeführt. Geprüft wird zum Beispiel, ob sich das Fahrzeug in einem lateralen Korridor $Y_{Korridor}$ z.B. +/- 0,1 m um die Linie befindet, so dass für die Auswertung der folgende Ungleichung überprüft wird:

$$\left| Y_{lat} \right| \leq Y_{Korridor}$$

Erreicht das Fahrzeug dieses Kriterium, so wird eine Zeit gewartet bis ein großer lateraler Wert erreicht wird. Der große laterale Wert entsteht durch das Umschalten der EGO-Fahrspurbegrenzungslinien. Bei diesem Umschalten wird ein Fahrspurwechsel erkannt und die jeweiligen Fahrspurbegrenzungslinien an den Fahrspurwechsel angepasst. Beispielsweise werden-die linken Fahrspurbegrenzuhgslinien bei einem Überfahren dieser Fahrspurbegrenzung zu den rechten Fahrspurbegrenzungslinien, wodurch ein Sprung bei der Neujustierung der Fahrspuren auftritt. Die Robustheit der Prüfung resultiert aus der die Nutzung des Korridors (nicht eines einzelnen Absolutwertes) und der Zeit in der die laterale Ablage der Linie sich erhöhen muss (nicht in einem Zyklus).

Eine Linie kann auch springen d.h. sie wird nicht vom Fahrzeug überfahren, sondern wird durch Auswahl der EGO-Fahrspurbegrenzung neu zum Fahrzeug positioniert. Die Robustheit der Detektion wird erreicht, in dem geprüft wird, ob die laterale Fahrzeugablage $Y_{lat}$ eine erste Schranke $Y_{Schranke}$ durchschreitet, d.h. ob der folgende Zusammenhang gilt:

$$\left| Y_{lat} \right| > Y_{Schranke}$$

Ist dies erfolgt wird wiederum eine Zeit gewartet bis die laterale Ablage in einen definierten Korridor $Y_{Korridor}$ gesprungen ist der einen großen Abstand zu der ersten Schranke aufweist.

$$\left| Y_{lat} \right| \leq Y_{Korridor}$$

Je nach dem was für eine Linie (z.B. linke EGO-Fahrspurbegrenzung, linke Nachbarspurbegrenzung, ....) ausgewertet wird, sollten der Korridor und die Schranken festgelegt werden.

Nach der Prüfung beispielsweise aller Linien, ob sie gesprungen sind oder überfahren wurden, erfolgt die weitere verfahrensgemäße Auswertung in einer Steuereinheit, bei der der erkannte Fahrspurwechsel für eine Fahrerassistenzfunktion genutzt werden kann.

Für die vorstehend beschriebene Vorgehensweise sind ferner zwei weitere Entscheidungen möglich, nämlich eine Zuverlässigkeitsentscheidung und eine Hierarchische Entscheidung. In der Zuverlässigkeitsentscheidung wird jeder Linie eine Zuverlässigkeit (d.h. ein Zuverlässigkeitswert) zugeordnet. Es erhalten z.B. die EGO-Linien einen sehr hohen Zuverlässigkeitswert. Linien die der Nachbarspur zugeordnet sind, werden kleinere Zuverlässigkeitswerte zugeordnet. Die Zuverlässigkeiten (d.h. die Zuverlässigkeitswerte) können beim Systementwurf statisch vergeben werden oder abhängig von einem Plausibilitätsmaß (beispielsweise wie gut wird die entsprechende Linie erkannt wird), welches jede Linie besitzt, ermittelt werden. Betrachtet werden insbesondere diejenigen Linien die "gesprungen" oder als "überfahren" klassifiziert werden. Die Zuverlässigkeiten der betrachteten Linien werden zu einem kumulierten Wert addiert. Liegt der kumulierte Wert über einer Zuverlässigkeitsschwelle, so wird das Ereignis "Fahrspurbegrenzung überfahren" für die LKS-Spurwechselfunktion generiert.

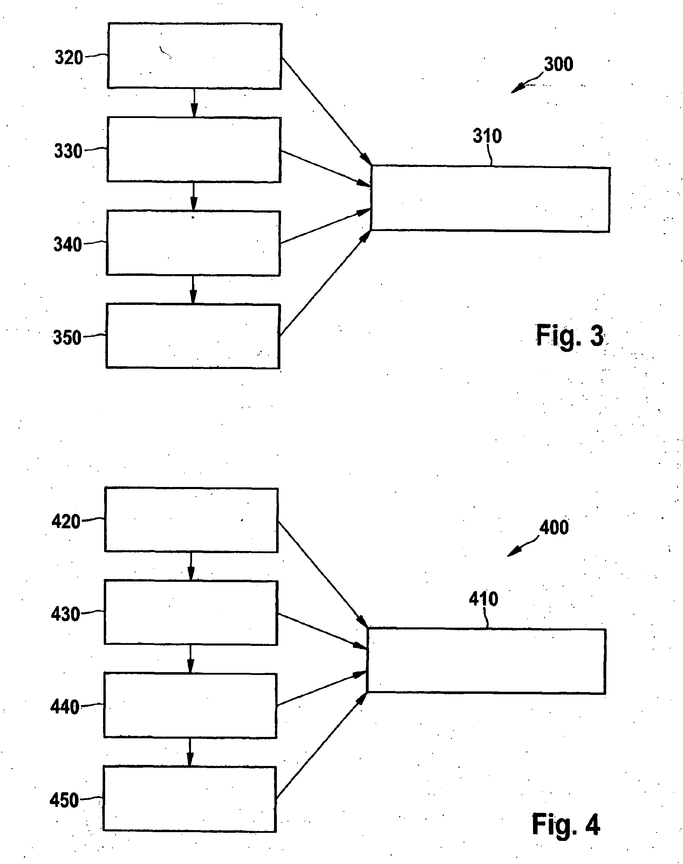

Bei der hierarchischen Entscheidung wird das Ergebnis oder der Zustand "linke Fahrspurbegrenzung überfahren" gesetzt oder generiert, wie es beispielsweise durch den Zustand 310 in dem Verfahren 300 gemäß dem Ablaufdiagramm aus Fig. 3 dargestellt ist. Hierzu wird zunächst in einem Schritt 320 überprüft, ob die linke EGO-Linie (d.h. die linke EGO-Fahrspurbegrenzung) überfahren wurde. Wurde dies als zutreffend erkannt, wird der Zustand 310 gesetzt. Wurde dies als nicht zutreffend erkannt, wird in einem nächsten Schritt 330 überprüft, ob die rechte EGO-Linie (d.h. die rechte EGO-Fahrspurbegrenzung) gesprungen ist. Wurde in diesem nächsten Schritt 320 erkannt, dass die rechte Ego-Linie gesprungen ist, wird wieder der Zustand 310 gesetzt. Wurde im Schritt 330 erkannt, dass die rechte Ego-Linie nicht gesprungen ist, wird ein nächster Schritt 340 ausgeführt, in dem geprüft wird, ob die Linie der linken Nachbarspur gesprungen ist. Wird dies als zutreffend erkannt, wird der Zustand 310 gesetzt. Wird in diesem Schritt 340 erkannt, dass die linke Linie der linken Nachbarspur nicht gesprungen ist, wird eine weitere Prüfung in einem Schritt 350 eingeleitet, ob die rechte Linie der rechten Nachbarspur gesprungen ist. Wird dies in der Prüfung gemäß Schritt 350 als zutreffend erkannt, kann ebenfalls wieder der Zustand 310 gesetzt werden.

Weiterhin kann auch in einem anderen Verfahren 400 eine Prüfung erfolgen, ob die rechte Fahrspurbegrenzung überfahren wurde. Wird bei dieser Prüfung ein positives Ergebnis erhalten, wird ein Ergebnis oder ein Zustand "rechte Fahrspurbegrenzung überfahren" 410 generiert oder gesetzt, wie es aus dem Ablaufdiagramm gemäß Fig. 4 dargestellt ist. Zunächst wird für eine solche Prüfung in einem ersten Schritt 420 untersucht, ob die rechte EGO-Linie überfahren wurde. Wird dies als zutreffend erkannt, wird der Zustand 410 gesetzt. Wird im ersten Schritt erkannt, dass die rechte EGO-Linie nicht überfahren wurde, wird in einem weiteren Schritt 430 untersucht, ob die linke EGO-Linie gesprungen ist. Wird dies als zutreffend erkannt, wird wieder der Zustand 410 gesetzt. Wird im Schritt 430 erkannt, dass die linke EGO-Linie nicht gesprungen ist, wird in einem nächsten Schritt 440 untersucht, ob die rechte Linie der rechten Nächbarspur gesprungen ist. Bei einem positiven Ergebnis der Untersuchung in diesem Schritt 440 wird wieder der Zustand 410 gesetzt. Bei einem negativen Ergebnis der Untersuchung, ob die rechte Linie der rechten Nachbarspur gesprungen ist, wird in einem weiteren Schritt 450 überprüft, ob die linke Linie der linken Nachbarspur gesprungen ist. Wird dies als zutreffend erkannt, wird wiederum der Zustand 410 gesetzt.

Gemäß einem anderen Aspekt der Erfindung wird ein Verfahren vorgeschlagen, welches eine sehr robuste und ruhige Solllinie generiert. Aus unabhängigen Linienstücken wird beispielsweise mittels einer statistischen Analyse eine Solllinie erzeugt die ohne eine Nachfilterung und ohne Zusatzsensorik dennoch die verringerte Dynamik erreicht. Somit steht eine sehr robuste Soillinie für zukünftige teilautomatisierte (= enge Fahrzeugführung mit starken Eingriffen) oder hochautomatisierte (= Systeme mit automatischer Spurwechselführung) LKS-Systeme zur Verfügung.

In diesem Ausführungsbeispiel der Erfindung besteht ein wichtiger Aspekt der Erfindung darin, eine statistische Analyse von Einzellinienstücken, eine Einbeziehung vom dynamisch niedereren Linien, eine Nutzung der Nebenfahrspurlinien und eine Kombination zu einer robusten Solllinie zu ermöglichen. Die größten Vorteile ergeben sich dabei durch die nicht notwendige Nachfilterung der Solllinie, da diese schon durch das hier beschriebene Verfahren die dynamischen Anforderungen in Bezug auf eine ruhige Linie erfüllt. Dieser Verzicht erlaubt dem LKS-Regelsystem eine ruhigere, robustere und vor allem stabilere Regelung des Fahrzeuges. Ein weiterer Vorteil ist die im Verfahren implizit enthaltene Eliminierung der Auswirkungen z.B. Signalunstetigkeiten von Linienfehldetektionen. Diese hoch dynamischen Effekte werden mit dem nachfolgend näher beschriebenen Verfahren nicht mehr in der Solllinie abgebildet. Somit zeigt die Bereitstellung der Solllinie eine höhere Robustheit gegenüber der Bereitstellung der Solllinie durch andere Verfahren auf und das ohne Einsatz von Zusatzsensoriken (z.B. digitale Kartendaten).

Herkömmliche LKS-Seriensysteme (die z.B. eine Videokamera zur Liniendetektion, ein Steuergerät zur Regelung, eine Lenkungs- oder Bremseinheit als Aktor umfassen können) die den Fahrer in der Querführung des Fahrzeugs durch leichte begrenzte Eingriffe unterstützen, benötigen keine sehr robuste Sollliniengenerierung, da die Eingriffe in die Fahrdynamik nur gering sind. Ebenso bestehen keine großen Stabilitätsanforderungen an einen zu verwendenden Regelkreis, was eine Standard-Filterung (die oftmals ein Problem in Bezug auf einen hohen Zeitverzug bedeutet) der Solllinie ohne Stabilitätsverlust des Regelkreises erlaub.

Zukünftig werden die LKS-Systeme jedoch stärker in die Fahrzeugsteuerung eingreifen, was vor allem eine Verringerung der Fehler in der Bereitstellung der Solllinie nötig macht und somit eine robuste und stabile Regelung für diese Fahrzeugsteuerung erforderlich macht.

Heutige Liniendetektoren erkennen unabhängige, einzelne Linienstücke und sollten für eine stabile und hohe Detektionsleistung keine parallele Linienannahme ausführen. Die einzelnen Linien besitzen deswegen keine Implementierungs- oder Systemabhängigkeit mehr.

Das hier vorgeschlagene Verfahren verarbeitet die Einzellinien bzw. Linienstücke, die im Folgenden auch als Einzellinien bezeichnet werden. Die Eihzellinien werden als ein Polynom dritten Grades beschrieben und besitzen die Koeffizienten Y laterale Ablage zum Fahrzeug, $\psi_D$ Orientierungswinkel Fahrzeug zur Linie, die bauliche Krümmung $\kappa$ der Linie und die Änderung der Krümmung.

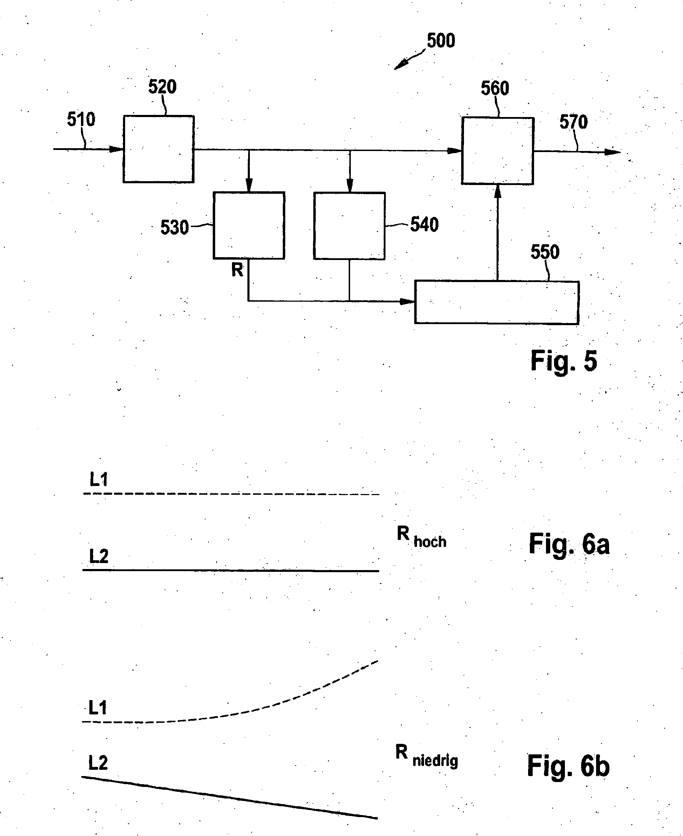

Der Schwerpunkt des nachstehend vorgeschlagenen Verfahrens liegt auf der Krümmungsaufbereitung. Zu einer Kurvenaufbereitung kann nach den Schritten des Verfahrens 500 gemäß dem Ablaufdiagramm aus in Fig. 5 vorgegangen werden. In einem solchen Verfahren 500 werden zunächst Linien oder Linienabschnitte 510 bereitgestellt, wie sie beispielsweise aus dem Schritt 210 gemäß Fig. 2 gewonnen oder erhalten werden. Wie in der Darstellung aus Fig. 5 gezeigt ist, wird die Krümmung der Linien 500 gegen transiente Signalverläufe im ersten Block oder Schritt 520 änderungsbegrenzt. Die Begrenzung basiert auf einem physikalisch motivierten Wert. Mit einer nachfolgenden statistischen Analyse in einem weiteren Schritt 530 wird die (Linien-) Korrelation der Einzellinien (oder zumindest zwei Linien) berechnet. Um genauer zu sein: es wird eine Korrelation der (änderungsbegrenzten) Krümmungswerte bestimmt, die durch den ersten Schritt 520 bereitgestellt werden. Da sich die Abhängigkeit der Einzellinien nur aus den baulichen Gegebenheiten (z.B. dem Verlauf der Leitplanken oder einer Fahrbahnmarkierung) ergibt, ist der berechnete Korrelationskoeffizient R hoch wenn die Linien näherungsweise parallel verlaufen, wie dies in Fig. 6a beispielhaft dargestellt ist. Divergieren die Linien so ergibt sich ein kleiner Korrelationskoeffizient R, wie es in Fig. 6b beispielhaft dargestellt ist. Berechnet man diese Korrelation R über ein Zeitintervall, ausgehend von der aktuellen Zeit über schon gemessene Werte, so lässt sich mit einer hohen Güte auf den Straßenverlauf schließen. Bei einer Bestimmung der Korrelationswerte gilt somit der folgende Zusammenhang:

Korrelation $R_{hoch}$ bedeutet, dass beide Linien L1 und L2 unabhängig gemessen sind und einen gleichen Straßenverlauf anzeigen (siehe Fig. 6a).
Korrelation $R_{niedrig}$ bedeutet, dass beide Linien L1 und L2 unabhängig gemessen sind und einen unterschiedlichen Straßenverlauf anzeigen (siehe Fig. 6b).

Ferner kann noch ein Mittelwert der Linienneigung in Schritt 540 aus den Krümmungen der Linien bestimmt werden. Beide betrachtete Linien, die die eigene Spur beschreiben, werden nun auf Basis dieses Wertes R (und eventuell auch auf der Basis des gebildeten Mittelwertes der Linienneigungen) gewichtet und zur Solllinie fusioniert. Hierzu werden im Schritt 550 zunächst gemäß dem nachstehenden Ansatz die Gewichte für die einzelnen Linien oder Linienabschnitte auf der Basis des oder der Korrelationskoeffizienten R (und eventuell des gebildeten Mittelwertes) gebildet und im Schritt 560 diese gebildeten Gewichte mit den Krümmungen der einzelnen Linien- oder Linienabschnitten verknüpft, um die Krümmung einer zu bestimmenden Solllinie (als physikalischer Referenzlinie 570) für die Spurführungsfunktionalität des Fahrerassistenzsystems bereitzustellen.

Ein wichtiger Punkt der Erfindung ist die Bildung der Gewichtung aus der Korrelation der Linien, wie sie gemäß der vorstehenden Beschreibung in Schritt 550 erfolgt. Liegt die Korrelation R (d.h. ein gebildeter Korrelationswert R) über einer definierten Schranke $R_{max}$, so werden beide Linien gleich gewichtet (beispielsweise mit den Gewischten a = 0,5 und b = 0,5) und dann entsprechend fusioniert.

$$K_{\text{Solllinie}} = a * K_{\text{linke Linie}} + b * K_{\text{rechte Linie}} \qquad (1)$$

wobei gilt:

$K_{\text{Solllinie}}$ = Krümmung der fusionierte Solllinie
$K_{\text{linke Linie}}$ = Krümmung der linken Linie der Fahrspur
$K_{\text{rechte Linie}}$ = Krümmung der rechten Linie der Fahrspur

Liegt der ermittelte Korrelationswert R unter einer definierten Schranke $R_{min}$, so wird die ruhigere Linie stark gewichtet. Dazu werden über n vergangene Messwerte die Krümmungsänderungen der Einzellinien gemittelt.

$$\dot{k}_{\text{gemittelt}} = \frac{1}{n} \sum_0^n \dot{k}_{t-n} \qquad (2)$$

Dies wird für jede Linie berechnet. Die ruhigere Linie ist immer das Minimum der mit Gleichung (2) berechneten gemittelten Änderung der Einzellinien. In dem Wertebereich $R_{min}$ bis $R_{max}$ wird das Gewicht nach folgender Vorschrift linear adaptiert:

$$W_I = W_0 + |R| \cdot \frac{(0.5 - W_0)}{R_{max}} \qquad (3)$$

$$W_{NI} = 1 - W_0, \qquad (4)$$

wobei gilt:

$W_I$ = Gewicht der ruhigen Linie
$W_{NI}$ Gewicht der unruhigen Linie
$W_0$ = Gewicht der ruhigen Linie wenn der Korrelationswert Null beträgt
R = Korrelationskoeffizient und
$R_{max}$ = Obere Schranke des Korrelationskoeffizienten R

Die Gewichte $W_I$ und $W_{NI}$ werden a und b in Gleichung (1) zugewiesen, je nachdem welche Linie als ruhig selektiert wurde. Ebenso kann die Gewichtsänderung begrenzt werden, so dass in jedem Zeitschritt nur eine Änderung von $W_I$ von z.B. 10% erfolgen kann. Dies ist günstig, dass, wenn sich die Verhältnisse der ruhigen Linien umkehren, es zu keinen Unstetigkeiten in den Gewichten kommen kann.

Ein weiterer Vorteil kann in der Einbeziehung der Nachbarlinien bestehen. Für diese können ebenfalls die Korrelationswerte mit prinzipiell allen anderen erfassten Linien berechnet werden z.B. ein Korrelationswert zwischen der linken Fahrspurlinie und der linker Nachbarspurlinie. Liegen die Korrelationen (d.h. die Korrelationswerte R) über einem Schwellwert $R_{Nachbar}$ so wird die entsprechende Linie mit einem Gewicht von c oder d in der Fusionskrümmungsgleichung berücksichtigt. Es ergibt sich somit eine Fusion nach folgendem Zusammenhang

$$K_{\text{Solllinie}} = a * K_{\text{linke Linie}} + b * K_{\text{rechte Linie}} + c * K_{\text{linke Nachbarlinie}} + d * K_{\text{rechte Nachbarlinie}} \qquad (5)$$

Die Gewichte aller Krümmungsanteile sollten die Summe Eins ergeben. Zweckmäßig wird den Gewichten der Nachbarlinien eher ein niederer Anteil (der beispielsweise konstant ist) zugesprochen. Die Korrelation entscheidet nur über die Einbeziehung der Nachbarkrümmungen.

Die beschriebenen Ausführungsbeispiele sind nur beispielhaft gewählt und können miteinander kombiniert werden.

**Patentansprüche**

1. Verfahren (200) zum Erkennen eines Fahrspurwechsels eines Fahrzeugs (100) oder zum Bereitstellen einer Krümmung einer Solllinie für eine Spurführung eines Fahrzeugs (100), wobei das Verfahren (200) die folgenden Schritte aufweist:

   - Empfangen (210) einer ersten Fahrspurinformation, die eine optisch erfasste erste Fahrspurbegrenzung (120), insbesondere einer Einzellinie, neben oder vor einer linken Fahrzeugseite (130) repräsentiert und/oder Empfangen einer zweiten Fahrspurinformation, die eine optisch erfasste zweite Fahrspurbegrenzung (120), insbesondere eine Einzellinie, neben oder vor einer rechten Fahrzeugseite (130) repräsentiert; und
   - Ermitteln einer Krümmung ($\kappa$) einer gewünschten Solllinie (57b) für eine Spurführung eines Fahrzeugs (100) aus der mit einem ersten Gewichtsfaktor (a) gewichteten ersten Fahrspurinformation und der mit einem zweiten Gewichtsfaktor (b) gewichteten zweiten Fahrspurinformation, wobei derjenige des ersten (a) oder zweiten (b) Gewichtsfaktors einen größeren Wert erhält, der der ersten oder zweiten Fahrspurinformation zugeordnet ist, die ein geringeres Krümmungsverhalten als die andere Fahrspurinformation aufweist.

2. Verfahren (200) gemäß Anspruch 1, **gekennzeichnet durch** ein Detektieren (220) eines Fahrspurwechsels, wenn die erste und/oder zweite Fahrspurinformation eine Fahrspurbegrenzung (120) repräsentiert, die einen vorbestimmten lateralen Abstand (150) zu einer Fahrzeugseite (130) unterschreitet.

3. Verfahren (200) gemäß Anspruch 2, **dadurch gekennzeichnet, dass** im Schritt des Detektierens (220) ein Fahrspurwechsel dann erkannt wird, wenn sich eine Fahrzeugseite (130) nicht mehr in einem lateralen Korridor zu einer Fahrspurbegrenzung (120) befindet, die durch die erste und/oder zweite Fahrspurinformation repräsentiert ist oder dass im Schritt des Detektierens (220) der Fahrspurwechsel dann erkannt wird, wenn ein absoluter Wert eines lateralen Abstandes (150) zwischen der Fahrzeugseite (130) und der durch die erste und/oder zweite Fahrspurinformation repräsentierten Fahrspurbegrenzung (120) einen vorbestimmten Abstandsschwellenwert überschreitet.

4. Verfahren (200) gemäß einem der vorangegangenen Ansprüche 2 oder 3, **dadurch gekennzeichnet, dass** im Schritt des Detektierens (220) ein Fahrspurwechsel dann erkannt wird, wenn beim kontinuierlichen Auswerten eines lateralen Abstandes (150) zwischen der durch die erste und/oder zweite Fahrspurinformation repräsentierten Fahrspurbegrenzung (120) und einer Fahrzeugseite (130) ein Sprung in dem lateralen Abstand (150) der Fahrspurbegrenzung zur Fahrzeugseite (130) erkanntwird.

5. Verfahren (200) gemäß Anspruch 4, **dadurch gekennzeichnet, dass** im Schritt des Detektierens (220) der Fahrspurwechsel dann erkannt wird, wenn der erkannte Sprung in dem lateralen Abstand (150) der Fahrspurbegrenzung (120) zur Fahrzeugseite (130) innerhalb einer vorbestimmten Zeitspanne oder einer zurückgelegten Strecke erfolgt, nachdem die durch die erste und/oder zweite Fahrspurinformation repräsentierte Fahrspurbegrenzung (120) den vorbestimmten Abstand unterschritten hat oder nachdem sich eine Fahrzeugseite (130) nicht mehr in dem lateralen Korridor zu der Fahrspurbegrenzung (120) befindet.

6. Verfahren (200) gemäß Anspruch 3, **dadurch gekennzeichnet, dass im** Schritt des Detektierens (220) der Fahrspurwechsel nach einem Überschreiten des vorbestimmten Abstandsschwellwertes erkannt wird, wenn ein absoluter Wert des lateralen Abstandes (150) zwischen der Fahrzeugseite (130) und der durch die erste und/oder zweite Fahrspurinformation repräsentierte Fahrspurbegrenzung (120) in einem Korridorbereich liegt, der Abstandswerte zur Fahrzeugseite (130) umfasst, die kleiner als der vorbestimmte Abstandsschwellenwert sind.

7. Verfahren (200) gemäß einem der vorhergehenden Ansprüche, **dadurch gekennzeichnet, dass** im Schritt des Empfangens (210) ferner eine dritte Fahrspurinformation, die eine optisch erfasste dritte Fahrspurbegrenzung links von der ersten Fahrspurbegrenzung (120) repräsentiert und/oder eine vierte Fahrspurinformation empfangen wird, die eine optisch erfasste vierte Fahrspurbegrenzung rechts von der zweiten Fahrspurbegrenzung (120) repräsentiert und im Schritt des Detektierens (220) der ersten und/oder zweiten Fahrspurinformation ein höherer Zuverlässigkeitswert als der dritten und/oder vierten Fahrspurinformation zugeordnet wird, wobei das Detektieren (220) des Fahrspurwechsels dann erfolgt, wenn eine Summe der Zuverlässigkeitswerte der beim Detektieren berücksichtigten Fahrspurinformationen größer als ein vordefinierter Zuverlässigkeitsschwellwert ist.

8. Verfahren (200) gemäß einem der vorhergehenden Ansprüche, **dadurch gekennzeichnet, dass** im Schritt des Detektierens (220) oder Ermitteins die Krümmung ($\kappa$) der Solllinie auf der Basis einer Addition einer mit dem ersten Gewichtsfaktor (a) gewichteten ersten Krümmung ($\kappa_{rechte\ Linie}$) und einer mit dem zweiten Gewichtsfaktor (b) ge-

wichteten zweiten Krümmung ($\kappa_{\text{linke Linie}}$) erfolgt, wobei die erste Krümmung aus der ersten Fahrspurinformation ableitbar ist und die zweite Krümmung aus der zweiten Fahrspurinformation ableitbar ist oder dass im Schritt des Detektierens (220) oder Ermittelns für den ersten (a) und den zweiten (b) Gewichtsfaktor ein gleicher Wert verwendet wird, wenn ein Korrelationswert (R) zwischen der Krümmung aus der ersten Fahrspurinformation und der Krümmung aus der zweiten Fahrspurinformation einen vordefinierten Korrelationsschwellwert ($R_{max}$) überschreitet..

9. Verfahren (200) gemäß einem der vorhergehenden Ansprüche, **dadurch gekennzeichnet, dass,** wenn ein Korrelationswert (R) zwischen der Krümmung aus der ersten Fahrspurinformation und der Krümmung aus der zweiten Fahrspurinformation einen vordefinierten Korrelationsschwellwert ($R_{min}$) unterschreitet, im Schritt des Detektierens (220) oder Ermittelns für den ersten (a) und den zweiten (b) Gewichtsfaktor ein unterschiedlicher Wert verwendet wird, wobei derjenige des ersten (a) und zweiten (b) Gewichtsfaktors den größeren Wert erhält, bei dem die zugeordnete Fahrspurinformation einen kleineren gemittelten Krümmungsableitungswert aus Krümmungsableitungswerten über mehrere zum Ermittlungszeitpunkt vorausgegangene Zeitintervalle aufweist.

10. Verfahren (200) gemäß einem der vorangegangenen Ansprüche, **dadurch gekennzeichnet, dass,** wenn ein Korrelationswert (R) zwischen der Krümmung aus der ersten Fahrspurinformation und der Krümmung aus der zweiten Fahrspurinformation in einem vordefinierten Korrelationsschwellwertbereich liegt, im Schritt des Detektierens (220) oder Ermittelns für den ersten und den zweiten Gewichtsfaktor ein unterschiedlicher Wert verwendet wird, wobei derjenige des ersten (a) und zweiten (b) Gewichtsfaktors den Wert

$$W_l = W_0 + |R| \cdot \frac{(0{,}5 - W_0)}{R_{max}}$$

erhält, bei dem die zugeordnete Fahrspurinformation einen kleineren gemittelten Krümmungsableitungswert aus Krümmungsableitungswerten über mehrere zum Ermittlungszeitpunkt vorausgegangene Zeitintervalle aufweist und der andere des ersten (a) und zweiten (b) Gewichtsfaktors den Wert

$$W_{Nl} = 1 - W_l$$

erhält, wobei
R den Korrelationskoeffizient, $W_0$ einen Gewichtswert bei einem Korrelationskoeffizienten von Null und $R_{max}$ eine obere Schranke des Korrelationskoeffizienten repräsentiert.

11. Verfahren (200) gemäß einem der vorangegangenen Ansprüche, **dadurch gekennzeichnet, dass** im Schritt des Empfangens (210) ferner eine dritte Fahrspurinformation, die eine optisch erfasste dritte Fahrspurbegrenzung links von der ersten Fahrspurbegrenzung (120) repräsentiert und/oder eine vierte Fahrspurinformation empfangen wird, die eine optisch erfasste vierte Fahrspurbegrenzung rechts von der zweiten Fahrspurbegrenzung (120) repräsentiert und im Schritt des Detektierens (220) oder Ermittelns ferner die Krümmung ($\kappa$) der gewünschten Solllinie für eine Spurführung des Fahrzeugs (100) aus der mit einem dritten (c) Gewichtsfaktor gewichteten dritten Fahrspurinformation und/oder der mit einem vierten (d) Gewichtsfaktor gewichteten vierten Fahrspurinformation ermittelt wird.

12. Steuergerät (140), das ausgebildet ist, um die Schritte eines Verfahrens (200) gemäß einem der Ansprüche 1 bis 11 durchzuführen.

13. Computerprogrammprodukt mit Programmcode, der auf einem maschinenlesbaren Träger gespeichert ist, zur Durchführung des Verfahrens (200) nach einem der Ansprüche 1 bis 11, wenn das Programm auf einem Steuergerät (140) ausgeführt wird.

**Claims**

1. Method (200) for detecting a lane change of a vehicle (100) or for providing a curvature of a target line for lane guidance of a vehicle (100), the method (200) having the following steps:

- receiving (210) a first item of lane information which represents an optically acquired first lane boundary (120), in particular an individual line, next to or in front of a vehicle side (130) on the left, and/or receiving a second item of lane information which represents an optically acquired second lane boundary (120), in particular an individual line, next to or in front of a vehicle side (130) on the right; and
- determining a curvature ($\kappa$) of a desired target line (570) for lane guidance of a vehicle (100) from the first item of lane information weighted with a first weighting factor (a) and from the second item of lane information weighted with a second weighting factor (b), that weighting factor of the first (a) or second (b), which is assigned to the first or second item of lane information which has a smaller curvature profile than the other item of lane information, assuming a greater value.

2. Method (200) according to Claim 1, **characterized by** detecting (220) a lane change when the first and/or second item(s) of lane information (120) represent(s) a lane boundary (120) which drops below a predetermined lateral distance (150) from a vehicle side (130).

3. Method (200) according to Claim 2, **characterized in that** in the detecting (220) step a lane change is detected whenever a vehicle side (130) is no longer located in a lateral corridor in relation to a lane boundary (120) which is represented by the first and/or second item(s) of lane information or **in that** in the detecting (220) step the lane change is detected whenever an absolute value of a lateral distance (150) between the vehicle side (130) and the lane boundary (120) represented by the first and/or second items(s) of lane information exceeds a predetermined distance threshold value.

4. Method (200) according to either of the preceding Claims 2 and 3, **characterized in that** a lane change is detected in the detecting (220) step whenever a jump is detected in the lateral distance (150) of the lane boundary from the vehicle side (130) during continuous evaluation of a lateral distance (150) between the lane boundary (120) represented by the first and/or second item(s) of lane information and a vehicle side (130).

5. Method (200) according to Claim 4, **characterized in that** the lane change is detected in the detecting (220) step whenever the detected jump in the lateral distance (150) of the lane boundary (120) from the vehicle side (130) happens within a predetermined time interval or a distance covered, after the lane boundary (120) represented by the first and/or second item(s) of lane information has dropped below the predetermined distance, or after a vehicle side (130) is no longer located in the lateral corridor in relation to the lane boundary (120).

6. Method (200) according to Claim 3, **characterized in that** in the detecting (220) step the lane change is detected after exceeding of the predetermined distance threshold value whenever an absolute value of the lateral distance (150) between the vehicle side (130) and the lane boundary (120) represented by the first and/or second item(s) of lane information lies in a corridor region which comprises distance values from the vehicle side (130) which are smaller than the predetermined distance threshold value.

7. Method (200) according to one of the preceding claims, **characterized in that** in the receiving (210) step a third item of lane information, which represents an optically acquired third lane boundary to the left of the first lane boundary (120), and/or a fourth item of lane information, which represents an optically acquired fourth lane boundary to the right of the second lane boundary (120), is/are further received and in the detecting (220) step the first and/or second item(s) of lane information is/are assigned a higher reliability than the third and/or fourth item(s) of lane information, the lane change being detected (220) whenever a sum of the reliability values of the items of lane information taken into account during detecting is greater than a predefined reliability threshold value.

8. Method (200) according to one of the preceding claims, **characterized in that** in the detecting (220) or determining step the curvature ($\kappa$) of the target line is performed on the basis of an addition of a first curvature ($\kappa_{line}$ to the right) weighted by the first weighting factor (a) and a second curvature ($\kappa_{line}$ to the left) weighted by the second weighting factor (b), it being possible to derive the first curvature from the first item of lane information and the second curvature from the second item of lane information, or **in that** the detecting (220) or determining step an equal value is used for the first (a) and the second (b) weighting factor when a correlation value (R) between the curvature from the first item of lane information and the curvature from the second item of lane information exceeds predefined correlation threshold value ($R_{max}$).

9. Method (200) according to one of the preceding claims, **characterized in that** when a correlation value (R) between the curvature of the first item of lane information and the curvature from the second item of lane information drops below a predefined correlation threshold value ($R_{min}$), a different value is used in the detecting (220) or determining step for the first (a) and the second (b) weighting factor, that weighting factor of the first (a) and second (b), for which the assigned item of lane information has a smaller averaged curvature derivative value from curvature derivative values over a plurality of time intervals preceding the instant of determination, assuming the greater value.

10. Method (200) according to one of the preceding claims, **characterized in that** when a correlation value (R) between the curvature of the first item of lane information and the curvature from the second item of lane information is situated in a predefined correlation threshold value range, a different value is used in the detecting (220) or determining step for the first and the second weighting factor, that weighting factor of the first (a) and second (b), assuming the value

$$W_f = W_0 + |R| \cdot \frac{(0.5 - W_0)}{R_{max}}$$

,

for which the assigned item of lane information has a smaller averaged curvature derivative value from curvature derivative values over a plurality of time intervals preceding the instant of determination, and the other of the first (a) and second (b) weighting factors assuming the value

$$W_{wf} = 1 - W_f$$

,

R representing the correlation coefficient. $W_0$ a weighting value for a correlation coefficient of zero and $R_{max}$ an upper limit of the correlation coefficient.

11. Method (200) according to one of the preceding claims, **characterized in that** in the receiving (210) step a third item of lane information, which represents an optically acquired third lane boundary to the left of the first lane boundary (120), and/or a fourth item of lane information, which represents an optically acquired fourth lane boundary to the right of the second lane boundary (120), are/is further received, and in the detecting (220) or determining step the curvature ($\kappa$) of the desired target line, for a lane guidance of the vehicle (100) is further determined from the third item of lane information weighted with a third (c) weighting factor and/or the fourth item of lane information weighted with a fourth (d) weighting factor.

12. Control device (140) which is designed to carry out the steps of a method (200) according to one of Claims 1 to 11.

13. Computer program product with program code which is stored on a machine-readable carrier, for carrying out the method (200) according to one of Claims 1 to 11, when the program is executed on a control device (140).

**Revendications**

1. Procédé (200) de détection d'un changement de bande de circulation par un véhicule (100) ou de préparation d'une courbure d'une ligne de consigne pour le guidage d'un véhicule (100) sur une bande de circulation, le procédé (200) présentant les étapes suivantes :

- réception (210) d'une première information de bande de circulation qui représente une première limite (120) de bande de circulation saisie optiquement, en particulier d'une ligne continue, à côté ou en avant du côté gauche (130) du véhicule et/ou réception d'une deuxième information de bande de circulation qui représente une deuxième limite (120) de bande de circulation saisie optiquement, en particulier une ligne continue, à côté ou en avant du côté droit (130) du véhicule et
- détermination d'une courbure ($\kappa$) d'une ligne de consigne (570) souhaitée pour le guidage d'un véhicule (100) sur une bande de circulation à partir de la première information de bande de circulation pondérée par un premier facteur de pondération (a) et de la deuxième information de bande de circulation pondérée par un deuxième facteur de pondération (b), le premier facteur de pondération (a) ou le deuxième facteur de pondération (b) qui est associé à la première ou à la deuxième information de bande de circulation qui présente une courbure plus petite que la deuxième information de bande de circulation recevant une plus grande valeur.

2. Procédé (200) selon la revendication 1, **caractérisé par** la détection (220) d'un changement de bande de circulation lorsque la première et/ou la deuxième information de bande de circulation représentent une limite (120) de bande de circulation qui n'atteint pas une distance latérale (150) prédéterminée par rapport au côté (130) du véhicule.

3. Procédé (200) selon la revendication 2, **caractérisé en ce que** dans l'étape de détection (220), un changement de bande de circulation est détecté lorsque le côté (130) du véhicule ne se trouve plus dans un corridor latéral par rapport à la limite (120) de bande de circulation qui est représenté par la première et/ou la deuxième information de bande de circulation ou **en ce que** dans l'étape de détection (220), le changement de bande de circulation est détecté si la valeur absolue de la distance latérale (150) entre le côté (130) et la limite (120) de la bande de circulation représentée par la première et/ou la deuxième information de bande de circulation dépasse une valeur prédéterminée de seuil de distance.

4. Procédé (200) selon l'une des revendications 2 ou 3 qui précèdent, **caractérisé en ce que** dans l'étape de détection (220), un changement de bande de circulation est détecté si, dans une évaluation continue d'une distance latérale (150) entre la limite (120) de bande de circulation représentée par la première et/ou la deuxième information de bande de circulation et le côté (130) du véhicule, un saut est détecté dans la distance latérale (150) entre la limite de la bande de circulation et le côté (130) du véhicule.

5. Procédé (200) selon la revendication 4, **caractérisé en ce que** dans l'étape de détection (220), le changement de bande de circulation est détecté si le saut détecté dans la distance latérale (150) entre la limite (120) de bande de circulation et le côté (130) du véhicule a lieu à l'intérieur d'une durée prédéterminée ou de la distance parcourue après que la limite (120) de bande de circulation représentée par la première et/ou la deuxième information de bande de circulation n'atteint plus la distance prédéterminée ou après que le côté (130) du véhicule ne se trouve plus dans le corridor latéral par rapport à la limite (120) de bande de circulation.

6. Procédé (200) selon la revendication 3, **caractérisé en ce que** dans l'étape de détection (220), le changement de bande de circulation après le dépassement d'une valeur de seuil de distance prédéterminée est détecté si la valeur absolue de la distance latérale (150) entre le côté (130) du véhicule et la limite (120) de bande de circulation représentée par la première et/ou la deuxième information de bande de circulation est située dans une plage de corridor qui comprend les valeurs de distance par rapport au côté (130) du véhicule plus petites que la valeur de seuil de distance prédéterminée.

7. Procédé (200) selon l'une des revendications précédentes, **caractérisé en ce que** dans l'étape de réception (210), une troisième information de bande de circulation qui représente une troisième limite de bande de circulation saisie optiquement et située à gauche de la première limite (120) de bande de circulation et/ou une quatrième information de bande de circulation qui représente une quatrième limite de bande de circulation saisie optiquement et située à droite de la deuxième limite (120) de bande de circulation sont reçues et une valeur de fiabilité plus élevée que celle de la troisième et/ou de la quatrième information de bande de circulation est associée lors de l'étape de détection (220) de la première et/ou de la deuxième information de bande de circulation, la détection (220) du changement de bande de circulation ayant lieu si la somme des valeurs de fiabilité des informations de bande de circulation prises en compte dans la détection est supérieure à une valeur prédéfinie de seuil de fiabilité.

8. Procédé (200) selon l'une des revendications précédentes, **caractérisé en ce que** lors de l'étape de détection (220) ou de détermination, la courbure ($\kappa$) de la ligne de consigne s'effectue sur la base de l'addition d'une première courbure ($\kappa_{ligne}$ droite) pondérée par le premier facteur de pondération (a) et d'une deuxième limite ($\kappa_{ligne}$ gauche) pondérée par le deuxième facteur de pondération (b), la première courbure pouvant être déduite de la première information de bande de circulation et la deuxième courbure de la deuxième information de bande de circulation, ou **en ce qu'**à l'étape de détection (220) ou de détermination, une valeur identique est utilisée pour le premier facteur de pondération (a) et la deuxième facteur de pondération (b) si une valeur de corrélation (R) entre la courbure déduite de la première information de bande de circulation et la courbure déduite de la deuxième information de bande de circulation dépasse une valeur prédéfinie de seuil de corrélation ($R_{max}$).

9. Procédé (200) selon l'une des revendications précédentes, **caractérisé en ce que** si une valeur de corrélation (R) entre la courbure déduite de la première information de bande de circulation et la courbure déduite de la deuxième information de bande de circulation n'atteint pas une valeur prédéfinie de seuil de corrélation ($R_{min}$), des valeurs différentes sont utilisées à l'étape de détection (220) ou de détermination du premier facteur de pondération (a) et du deuxième facteur de pondération (b), le premier facteur de pondération (a) ou le deuxième facteur de pondération (b) pour lequel l'information de bande de circulation associée présente une valeur déduite de courbure moyenne plus petite que les valeurs de courbure déduites sur plusieurs intervalles de temps qui précèdent l'instant de détermination recevant la plus grande valeur.

10. Procédé (200) selon l'une des revendications précédentes, **caractérisé en ce que** si la valeur de corrélation (R) entre la courbure déduite de la première information de bande de circulation et la courbure déduite de la deuxième information de bande de circulation est située dans une plage prédéfinie de valeurs de seuil de corrélation, des valeurs différentes sont utilisées pour le premier et le deuxième facteur de pondération lors de l'étape de détection (220) ou de détermination, le premier facteur de pondération (a) ou la deuxième facteur de pondération (b) pour lequel l'information de bande de circulation associée présente une valeur déduite de courbure moyenne plus petite que les valeurs de courbure déduites sur plusieurs intervalles de temps qui précèdent l'instant de détermination recevant la valeur

$$W_i = W_0 + |R| \cdot \frac{(0,5 - W_0)}{R_{max}}$$

et l'autre parmi le premier facteur de pondération (a) et le deuxième facteur de pondération (b) recevant la valeur

$$W_{Ni} = 1 - W_i$$

R représentant le coefficient de corrélation, $W_0$ une valeur de pondération correspondant à un coefficient de corrélation nul et $R_{max}$ la limite supérieure du coefficient de corrélation.

11. Procédé (200) selon l'une des revendications précédentes, **caractérisé en ce qu'**à l'étape de réception (210), une troisième information de bande de circulation qui représente une troisième limite de bande de circulation saisie optiquement et située à gauche de la première limite (120) de bande de circulation et/ou une quatrième information de bande de circulation qui représente une quatrième limite de bande de circulation saisie optiquement et située à droite de la deuxième limite (120) de bande de circulation sont reçues et à l'étape de détection (220) ou de détermination, la courbure ($\kappa$) de la ligne de consigne souhaitée du guidage du véhicule (100) sur la bande de circulation est en outre déterminée à partir de la troisième information de bande de circulation pondérée par un troisième facteur de pondération (c) et/ou de la quatrième information de bande de circulation pondérée par un quatrième facteur de pondération (d).

12. Appareil de commande (140) configuré pour exécuter les étapes d'un procédé (200) selon l'une des revendications 1 à 11.

13. Produit de programme informatique doté de codes de programme conservés en mémoire sur un support lisible par machine en vue de la mise en oeuvre du procédé (200) selon l'une des revendications 1 à 11 lorsque le programme est exécuté sur un appareil de commande (140).

**Fig. 1**

**Fig. 2**

320

330

340

350

300

310

**Fig. 3**

420

430

440

450

400

410

**Fig. 4**

Fig. 5

$R_{hoch}$     Fig. 6a

$R_{niedrig}$     Fig. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137292
- WO 2006037445 A1
- US 2004016870 A1
- US 5892855 A